Europäisches Patentamt
European Patent Office
Office européen des brevets

(19)

(11) Publication number: **0 059 212**
**B1**

(12) **EUROPEAN PATENT SPECIFICATION**

(45) Date of publication of patent specification: **19.11.87**

(51) Int. Cl.⁴: **C 04 B 35/44**

(21) Application number: **81902516.4**

(22) Date of filing: **28.08.81**

(86) International application number: **PCT/US81/01158**

(87) International publication number: **WO 82/00820 18.03.82 Gazette 82/08**

(54) **MAGNESIUM ALUMINIUM SPINELS.**

(30) Priority: **04.09.80 US 184189**
**18.12.80 US 217712**

(43) Date of publication of application: **08.09.82 Bulletin 82/36**

(45) Publication of the grant of the patent: **19.11.87 Bulletin 87/47**

(84) Designated Contracting States: **AT DE FR GB NL SE**

(56) References cited:
**GB-A- 697 231**
**SU-A- 449 021**
**US-A-3 681 011**
**US-A-4 116 856**
**US-A-4 116 857**
**US-A-4 116 858**
**US-A-4 183 900**
**CERAMIC BULLETIN 48, no. 8, 1969, pp. 759-762**

***The file contains technical information submitted after the application was filed and not included in this specification***

(73) Proprietor: **THE DOW CHEMICAL COMPANY**
**2030 Dow Center Abbott Road P.O. Box 1967**
**Midland, MI 48640 (US)**

(72) Inventor: **BERTELSMAN, Dale Marion**
**106 Red Bud Street**
**Lake Jackson, TX 77566 (US)**
Inventor: **ECKERT, William Mark**
**632 West Mimosa**
**Angleton, TX 77515 (US)**
Inventor: **MORROW, Stanley Joseph**
**P.O. Box 1203**
**Clute, TX 77531 (US)**
Inventor: **HENSLEE, Walter Warren**
**58 South Shamrock Court**
**Lake Jackson, TX 77566 (US)**
Inventor: **LINDSEY, John Sutton**
**1243 Copperfield**
**Houston TX 77031 (US)**
Inventor: **PERIARD, John Neil**
**1284 E. Midland Road**
**Bay City, MI 48706 (US)**
Inventor: **WHITWORTH, Charles Robert**
**Route 3, Oak Road**
**Plymouth, WI 53073 (US)**
Inventor: **STROTHER, Gerrene Wallace, Jr.**
**Route 11434**
**Brazoria, TX 77422 (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 059 212 B1**

Courier Press, Leamington Spa, England.

(74) Representative: **Urbanus, Henricus Maria, Ir. et al**
**c/o Vereenigde Octrooibureaux Nieuwe Parklaan 107**
**NL-2587 BP 's-Gravenhage (NL)**

**Description**

Background of the invention

Spinels are well known metal oxides of specific structural configuration having a generic formula $M_3O_4$ where M represents the same or different metal elements having different valences whose sum of products of the valence times the number of atoms of each element having that valence equal, preferably eight, but may vary up to 10 percent excess or deficiency of the metal ion relationship from eight. Exemplary of the common formulae are, e.g., $MgAl_2O_4$, and $ZnCo_2O_4$ where the sum of the product of the positive elements valence times the number of atoms of each valence equals eight. Exemplary of imbalanced stoichiometry, excess and deficient atom structures, are, e.g., $Mg_{0.9}Fe_{0.11}Al_2O_4$ and $Ni_{0.2}Co_{0.79}Co_2O_4$ respectively.

Most prior art techniques used commercially for preparing ceramic spinels employ the fusion technique of the metal oxides. This technique is not wholly satisfactory for the preparation of ceramic spinels because the metal atoms do not completely form into the spinel lattice structure; that is, some metal atoms form a segregated oxide phase admixed with the spinel lattice structure and once formed by fusion the crystals are not amenable to shaping by pressure and sintering without the aid of binders which may be detrimental to acid and/or base resistance and physical properties of the finished product. Organic binders in ceramics made in this way make the body relatively porous when they are removed during or after shaping. Segregated ceramic binders may weaken the body because they are the site of differential expansion and contraction and/or chemical attack.

The prior art also recognized the phenomena of spinel formation being a physio-chemical reaction based on thermal conditions such that, regardless of the ratio of the metals, some spinel lattice would form at the correct temperature, physical and chemical conditions, albeit those atoms not forming a spinel lattice structure remain as segregated phases of the metal oxides. The spinel shapes which are commercially available usually have been prepared from spinels produced from starting materials containing impurities or one or more segregated metal oxides phases and thus are relatively poor with respect to their physical properties, e.g., tensile strength, acid and/or base resistance and porosity.

Numerous patents and scientific literature have been published disclosing different techniques for preparing spinels (esp. $MgAl_2O_4$). Most procedures employ metal oxides or oxidizable compounds, both of which are converted to a spinel by firing or fusion with or without pressure.

In some patents a magnesium compound and an aluminum compound are mixed to give the requisite molecular constitution, are wet ground and mixed, and fired at temperatures up to 3,000°F (ca 1660°C) as for example, in U.S. Patent 2,618,566 or shaped before firing into pebbles as in U.S. Patent 2,805,167.

Others use pure magnesia and alumina mixtures which are then fired at 2150°C and cooled slowly overnight, (e.g. U.S. Patent 3,516,839). Still others mix alumina with magnesium nitrate, dry fire on a schedule to 1400°C, and then grind to obtain a powder, (e.g. U.S. Patent 3,530,209). Another technique follows the fusion route of magnesium nitrate hexahydrate and ammonium aluminum sulfate dodecahydrate (both reagent grade) to 1300°C to produce a fine powder, (e.g. U.S. Patent 3,531,308). A magnesium-salt ($MgSO_4 \cdot 7H_2O$), aluminum-salt ($Al_2(SO_4)_3 \cdot 18H_2O$) mixture, co-crystal has been employed to prepare a powder which is then shaped into ceramic bodies by hot press techniques with or without the use of binders (e.g. U.S. Patent 3,544,266).

Concomitant with these developments researchers investigated the nature of metal double hydroxides formed by coprecipitation, some of which were shown to convert to a spinel upon calcination. Early work was performed by Feitnecht and his students who made a series of double hydroxides with Mg/Al ratios between 1.5 and 4 to 1, respectively, by coprecipitation from magnesium and aluminum chlorides, Helv. Chim Acta 25, 106—31 (1942), 27, 1495—1501 (1944). No change could be detected by x-ray diffraction techniques then available for different Mg/Al ratios or a certain degree of substitution by chloride for hydroxide. A similar double hydroxide, reported to be a hydrate even after heating to 150°C, was reported by Cole and Hueber in "Silicates industriels" Vol. 11, pp 75—85 (1957). The compound was made by the reaction of NaOH with Al metal or $Al_2(SO_4)_3$ and MgO or $MgSO_4$ at 65—70°C. The product had a Mg/Al ratio of 4/1 even when reactant proportions were varied. However, $Mg(OH)_2$ was observed as a second phase in some cases.

More recently, Bratton in both Journal of The American Ceramic Society, Vol. 52, No. 8 (1969), and Ceramic Bulletin, *48*, #8 pp 759—62 (1969) *48*, 11, pp 1569—75, reported the coprecipitation of numerous magnesium and aluminium chlorides and oxalates which on heating, drying, calcining or firing, exhibited a spinel x-ray diffraction crystallographic pattern. The coprecipitation product resulted in a magnesium aluminum double hydroxide of composition $2Mg(OH)_2 \cdot Al(OH)_3$, plus a large amount of segregated gibbsite $Al(OH)_3$ phase (see also U.S. Patent 3,567,472). This is presumably the same product Feitnecht obtained.

Bakker and Lindsay in "Ceramic Bulletin" Vol. 46, No. 11, pp 1095—1097 (1967) report that a high density spinel body can be made from $Mg(OH)_2$ and $Al(OH)_3$ if 1.5% $AlF_3$ is added as a mineralizer.

In the works cited above these powders were, in some instances, calcined then fired while in other instances the powders were heated through the calcining range and ultimately through the firing and even the fusion range. Early work was directed to preparing spinels usable as a decolorant, U.S. Patents 2,395,931 and 2,413,184 or as antacids, U.S. Patents 3,323,992 and 3,300,277. In the last case a "highly hydrated magnesium aluminate" is claimed as a new composition of matter, the formula of which is

$Mg(OH)_2 \cdot 2Al(OH)_3 \cdot XH_2O$ where X=4 to 8. The material is prepared by the reaction of $NaAlO_2$ ($Na_2Al_2O_4$), NaOH and $MgCl_2$ as aqueous solutions at a pH from 8—9. Bratton in U.S. Patent 3,567,472 also discloses coprecipitation of a magnesium and aluminium chloride from a solution having a pH from 9.5 to 10, drying or firing to obtain a light-transmitting spinel by adding CaO.

## Brief description of the invention

The invention provides a coprecipitate comprised of a layered crystallite having the structure

$$\begin{array}{ll} M^{II} & {}^{c}_{d}Y^{d}_{c} \\ \hline M^{I} & {}^{a}_{b}X^{b}_{a} \\ \hline M^{II} & {}^{c}_{d}Y^{d}_{c} \\ \hline \end{array}$$

wherein $M^I$ represents one or more metal cations having valence(s) a, $M^{II}$ represents one or more metal cations, at least one of which is different from $M^I$, having valence(s) c different from a, $M^I$ and $M^{II}$ being selected from the group consisting of Li, Mg, Zn, Al, Cr and mixtures thereof;

X and Y each represent one or more anions having valences b and d, in charge balance with a and c, respectively, and being selected from the group consisting of $OH^-$, $F^-$, $Cl^-$, $SO_4^=$, $OCOCH_3^-$, $CO_3^=$, $HCO_3^-$, and mixtures thereof;

the molecular ratio of $M^IX$ to $M^{II}Y$ being $(1+z)M^IX \cdot 2M^{II}Y$ where z≧zero but less than 3; and sufficient segregated phases of the formula $M^{II} \cdot O \cdot Y$ and/or $M^{II}Y$ to provide an overall stoichiometry of about $M^IX . 2M^{II}Y$.

The invention also provides a method for preparing such coprecipitate, comprising the steps of coprecipitating from a solution the dissolved $M^IX$ and $M^{II}Y$ at the lowest pH of the solution at which precipitation will occur for all components, the coprecipitation being carried out in a continuous flow reactor whereby the precipitate is continuously removed, maintaining $M^{II}Y$ and $M^IX$ in the ratio of 1.8 to 1 to 2.2 to 1, respectively at a temperature of from 20°C to 100°C, washing the mother liquor and the precipitate with water or an alkaline solution, separating the precipitate from its mother liquor, washing the so treated precipitate, and drying the precipitate.

Further, the invention provides a method for preparing a spinel by calcining such coprecipitate at a temperature of 400—1400°C and, optionally, sintering said calcined spinel at a temperature above 1500°C.

In addition, the invention provides a method for preparing a casting composition, comprising the steps of preparing a spinel powder by calcining a coprecipitate as defined above at a temperature of 400—1400°C, and combining said calcined spinel with water and a deflocculating agent to form a substantially stable dispersion of the spinel powder which comprises from 10 to 75% by weight of the spinel.

In accordance with the present invention a spinel can be prepared by coprecipitating metal compounds in a proportion and kind to provide metal atoms of two different valences, albeit they may be the same metal or different metals, to total eight, plus or minus about 10%, positive valences available to combine with four oxygen atoms in the generic stylized formula $M_3O_4$ (or $MM'_2O_4$). The coprecipitation produces, when conducted at a pH of from 8 to 10 at which coprecipitation occurs, (usually between about 9 and 9.5 for Mg/Al), a product having a specific layered crystalline structure which may or may not contain a segregated aluminum hydroxide or oxyhydroxide phase. The product slurry may be treated with an alkaline solution before being filtered and washed. This alkaline wash may be used to increase the Mg/Al ratio of the coprecipitate by the selective dissolution of Al from the coprecipitate. The coprecipitate is then dried and calcined at a temperature of from 400°C to 1400°C and preferably at a temperature from 900°C to 1400°C thereby forming the crystal lattice of the spinel structure with little or no segregated phases of either metal. The so-formed spinel, usually a powder, can be sintered at a temperature above about 1500°C with or without shaping into a thermally and chemically stable product capable of achieving greater than 99% of the theoretical density of a spinel crystal lattice structure. The resulting high density products resistant to acidic and basic attack and shock resistant including thermal shock.

Thus, it has now been found, for example, if a magnesium compound such as, magnesium hydroxide, or the chloride, sulfate, acetate, fluoride carbonate and bicarbonate is coprecipitated with an aluminum compound, such as aluminum hydroxide, or the chloride or sulfate, at a pH to coprecipitate the compounds at least one of the metals is converted to its respective hydroxide or partial hydroxide during the coprecipitation followed by washing with or without alkalinity before recovering the coprecipitate there is obtained a product having the following composition upon drying at approximately 125°C for several hours:

$$(1+z)M^{I}\,{}^{a}_{b}X^{b}_{a} \cdot 2M^{II}\,{}^{c}_{d}Y^{d}_{c}$$

wherein each X and Y is independently selected from the aforementioned anions and at least one X and/or Y is —OH and z represents a number less than 3 and preferably about 1, and where when z is greater than 0 there will be present at least one segregated phase, as for example in the magnesium-aluminum

coprecipitate an aluminum phase of $Al(OH)_3$ and/or $AlO(OH)$, and wherein "a" times the number of atoms of $M^{I(b)}$ equals the valence b of X times a, the number of atoms of X, and similarly c times the number of atoms of $M^{II(d)}$ equals the valence d of Y times c, the number of the atoms of Y, the $M^{II}/M^{I}$ ratio in the total coprecipitate being maintained at about 2 to 1 respectively, and having a volatile content of about 40% by weight when a Cl atom is present and about 36% by weight when all the X and Y's are —OH moieties, (analysis by thermogravimetric analysis). The exemplified coprecipitate is not a hydrate and individual crystallites have $M^{II}/M^{I}$ ratios significantly different from those previously reported, for example when $M^{II}$ is aluminum and $M^{I}$ is magnesium, as shown by micro-area x-ray fluorescence, electron diffraction and high resolution x-ray diffraction. The dried precipitate is thereafter calcined at a temperature of from 400°C to 1400°C for from typically about 4 hours to about 1 hour, respectively. The calcined precipitate has an x-ray diffraction pattern of the spinel structure, for example, $MgAl_2O_4$. The so-calcined precipitate can be formed into bricks or other ceramic shapes by pressing at preferably between 1000 to 10,000 psig (7—70 MPa gauge) although higher pressures may be employed and firing the shape at above about 1200°C, preferably above 1400°C. The shape will densify uniformly. Thus, densities may range from as low as 50% to as high as >99% and greater than that of theoretical density, depending on the following variables:

1. The chemical composition of the powder;
2. The calcination history of the powder;
3. Powder processing history, i.e. particle size distribution selected for pressing, lubricants and binders added to the powder, and the like;
4. Mode of pressing the powder into a shape and sintering technique used.

In accordance with the present invention a (thermally and chemically stable) spinel can be prepared by coprecipitating metal compounds (e.g., magnesium and aluminum hydroxides, or chloro hydroxides) that is, coprecipitating a metal compound or compounds having an atomic valence of one, two, three, four, or six or convertible thereto on conversion to the oxide, recovering the precipitate as a powder and calcining the powder, thereby to prepare a spinel suitable for sintering with or without shaping.

Spinels are well known metal oxides having a specific structural configuration and having a generic formula $M_3O_4$ where M is at least two metal atoms $M^{I}$ and $M^{II}$, which may be the same or different metal elements, having different valences whose sum of products of the valence times the number of atoms of each valence equal, preferably eight but may vary up to 10 percent excess or deficiency from eight. Exemplary of the common formula is $MgAl_2O_4$ where the sum of the product of the valence times the number of atoms equals eight. Exemplary of imbalanced stoichiometry, excess and deficient atom structures, is e.g., $Mg_{0.9}Fe_{0.11}Al_2O_4$.

In addition to the basic spinel, numerous mixed spinels were prepared. Mixed spinels can be made in any one of several ways. The preferred way is to add the desired metal at the coprecipitation step. However, this may not always be the practical, or the hydroxides may have such a large difference in solubility that a coprecipitate with the desired composition is not formed. The second method of preparation is to mix the separately prepared compounds in the desired ratio. This requires only a knowledge of the metal content by, say, X-ray fluorescence. The mixture may be ground intimately if a homogeneous composition (e.g. one mixed phase such as $Mg^{+2}_{0.3}Co^{+2}_{0.7}Al^{+3}_{1.3}Co^{+3}_{0.704}$) is desired. It is also to be recognized that when the "mixed spinels" are desired and the third metal is, or two or more additional metals are added at the coprecipitate stage the pH for coprecipitation may have to be varied, as for example when chromium is added the pH is adjusted to about 9.7 to insure coprecipitation of all three metals in, for example, a Mg/Al/Cr system. Alternately, a dry mixture may be mixed poorly, or a gross disparity in the particle size distribution of the starting materials may be introduced, if a range of compositions is desired (e.g. $Mg^{+2}_{x}Co^{+2}_{1-x}Al^{+3}_{2-y}Co^{+3}_{y}O_4$, where x and y vary from region to region in the mass). The most preferred way to prepare a range of solid solutions within one sample is to add at least one of the metals as the hard burned oxide which limits its reactivity. One should not assume that the same effect will be achieved if the preburned oxide is the spinel component versus it being the additive metal. In general, the higher the preburned component has been calcined, the lower its activity will be toward solid solution formation. In some cases part of the additive metal may enter the spinel structure and part may form a separate oxide phase. In addition, a doping metal compound may be added to the pre-calcined or post-calcined spinel and may exhibit phase segretion or solid solution formation, depending on its reactivity and that of the spinel phase.

In accordance with the present invention a spinel can be prepared by co-precipitating metal compounds, that is the metal sulfates, chlorides, hydroxides, hydroxychlorides, oxychlorides and the like, or mixtures thereof as afore set forth, in a proportion and kind to provide metal atoms of two different valences, albeit they may be the same metal or different metals, to total eight or about eight positive valences available to combine with oxygen in the generic stylized formula $M_3O_4$ (or $M^{I}_{a} \cdot 2M^{II}_{b}O_4$). The coprecipitate is preferably washed with an alkaline solution, dried and calcined at a temperature of from 400°C to 1400°C, preferably from 1000°C to 1200°C thereby forming the crystal lattice of the spinel structure. The so-formed spinel, usually a powder, can be sintered with or without shaping into a thermally and chemically stable product capable of achieving a density of greater than 99% of the theoretical density of a

spinel crystal lattice structure. The resulting high density products have good chemical and mechanical properties.

It is to be further understood that modifications in the stoichiometry may be made so long as it is understood and desired to produce less dense (final density less than about 90% of theoretical) products and/or separate metal oxide crystal phases admixed with and bordering the spinel crystallites in the body. In fact one can so deviate from the stoichiometry of the normal spinel that there are obtained products similar in analysis to those obtained by the fusion melt practiced by the industry, i.e., a large proportion of segregated phase, (e.g. high magnesium oxide separate phase) which depending on use, may or may not be detrimental.

The modified spinels, in contradistinction to the mixed spinels of the present invention, can be obtained by mixing, (a) during coprecipitation, an excess of one or more of a metal compound coprecipitants, (b) a desired separate phase metal compound with the coprecipitated uncalcined precursor (c) an additive oxide with the calcined intermediate of the present invention prior to sintering, or (d) an additive oxide can be added to the spinel following grinding and sintering, but before shaping, especially if simple physical mixtures are desired.

The utility of the products of the present invention permit a wide variation in manufacturing techniques. For example, ceramic shapes, such as bricks, can be made by casting the calcined spinel powder using an aqueous suspending medium or compressing the calcined intermediate under moderate pressure and then sintering, the densification of the spinel occurring during unpressured sintering, or the powder can be subjected to fusion molding of brick or like forms. In addition, a conventional brick can be coated with the calcined intermediate powder and the coating sintered on the surface of a melt of the sintered spinel can be sprayed on a surface, the sintering, at least-in-part, occurring during the melt-spray technique.

As stated above, modifying metals can be incorporated into the process at various stages with different results. For example, iron oxide may be added at any stage and when added as a part of the coprecipitates it will enter into a spinel lattice since it has the capability of forming both two and three valence atoms which are capable of orientation into the spinel lattice structure form and if the iron is added as exemplified above to the coprecipitates of say Mg and Al, the final spinel will take the structure exemplified by the formula

$$Mg_a^{+2}Fe_{1-a}^{+2}Fe_b^{+3}Al_{2-b}^{+3}O_4$$

where a=0 to 1, b=0 to 2 and where, depending on the amount of iron, the iron may be the principal metal or the modifying metal. If, on the other hand, the iron is added to the already sintered spinel the majority of the iron will be present as a separate phase. In the case of multivalent metals such as iron, a spinel lattice such as $Fe^{+2} \cdot (Fe^{+3})_2 \cdot O_4$ may form as a separate structure and/or become a solid solution type crystal intermingled with the magnesium aluminate spinel to which it has been added. Some variation in the tendency to form a segregated phase is observed when the atmosphere is highly oxidizing vs. when it is inert.

In one embodiment of the present invention sodium aluminate ($Na_2Al_2O_4 \cdot 3H_2O$) was mixed with magnesium chloride ($MgCl_2$) in the presence of hydrochloric acid (HCl). The dispersed precipitate was washed, preferably in an alkali solution, filtered and washed again with water, dried and calcined at a temperature of from 1000° to 1200°C to form fine discrete particles suitable for compression-forming into desired shapes, such as bricks, which can be sintered at above about 1400°C, preferably above about 1500°C.

In another embodiment a bulk grade of aluminum hydroxide was dissolved in sodium hydroxide, then filtered and the soluble aluminate employed in the manner of the foregoing description.

In still another embodiment aluminum sulfate and magnesium sulfate were employed as the coprecipitants employing sodium hydroxide as the source of alkalinity. The resulting co-precipitate was treated as before.

In like manner, aluminum chloride and magnesium chloride were coprecipitated in the presence of sodium hydroxide and the precipitate treated as above.

In another embodiment magnesium and aluminum chlorides were reacted with sodium hydroxide and then hydrochloric acid to control the pH of precipitation and the precipitate treated as before.

In yet another embodiment the metal chloride was converted to the hydroxide, as $AlCl_3$ to $Al(OH)_3$, then reacted with the chloride or hydroxy chloride of the other metal and the product treated as above.

More particularly, the present invention is carried out, in a presently preferred manner, by the simultaneous precipitation or coprecipitation of metal compounds which are, or which form on treatment with an alkali wash, separation and heating, the metal hydroxides or partial metal hydroxides, and then subsequently on heating above about 1200°C the metal oxide. The proportion of the metals is such that the sum of the valences of each metal multiplied by its atomic quantity will total 8 or about 8, i.e. plus or minus ten percent. The spinel structure is identified by this ideal metal valence to the 4 oxygen atoms present as $M_3O_4$ (or $M_a^I \cdot 2M_b^{II}O_4$). It is to be understood that a slight deficiency or excess in total metal valence over 8 may occur with a concommitant small change in final product, yet most of the spinel characteristics of the products of this invention remain. Illustrative of the aforedescribed embodiments including the imperfect

valence balance are hereafter set forth, with specific reference to aluminum and magnesium, it being understood that other common metals may be substituted for either or both aluminum or magnesium and still obtain the benefits of this invention.

The simultaneous precipitation of metals in the ratio to obtain the spinel structure in accordance with the preferred embodiment of the present invention results in a precipitate which has an overall stoichiometry of $M^{I}M_2^{II}(OH)_8$. The ratio of $M^{I}$ to $M^{II}$ is 2 but may vary up to 10% excess of either. In this latter case it is believed that in some instances the 8 valences required for the spinel structure and the 2 to 1 metal ratio are fulfilled first and the excess metal forms a separate oxide phase surrounding or occluded within the spinel crystallites.

The coprecipitates in the above form, e.g., $M^{I}M_2^{II}(OH)_8$ where $M^{I}$ is a divalent metal atom and $M^{II}$ is a trivalent metal atom, is made up of layered crystallites with the following composition, as evidenced by x-ray diffraction, electron diffraction, electron microscopy and micro area x-ray fluorescence.

$$\frac{M^{II}(OH)_3}{(1+z)M^{I}(OH)_2\cdot} \quad = (1+z)M^{I}(OH)_2\cdot 2(M^{II}(OH)_3)$$
$$M^{II}(OH)_3$$

plus separate phases $2M^{II}O(OH)$ (also written $M_2^{II}O_3\cdot H_2O$) and $M^{II}(OH)_3$ to maintain the overall product stoichiometry $M^{I}M_2^{II}(OH)_8$ when z is greater than zero but less than 3. Some of the hydroxide in this structure can be replaced by Cl, acetate, sulfate or various other anions and mixtures of anions as discussed previously.

This particular layered structure is in evidence in each of the following preparations made from the wet state. The crystal structures can be indexed on the basis of a hexagonal unit cell in which the a axis is the most sensitive to changes in cation size and the c axis is the most sensitive to changes in anion size. Following calcining of the dry powder the x-ray diffraction pattern matches that of the spinel plus, provided that if the stoichiometry is not exact, evidence of separate phases of other metal oxides.

Several other techniques can be employed as illustrated below, each forming the layered structure as the coprecipitate. The spinel structure on calcining is amenable to low pressure forming and densification on sintering.

Specifically, one can co-precipitate an aluminum magnesium spinel precursor (which after calcining forms the spinel) by one of the following techniques wherein $M^{I}$ represents for balanced equations a divalent atom, namely for illustrative purposes only magnesium, and $M^{II}$ represents a trivalent atom, namely aluminum.

1. $M^{I}X+M^{II}Y$+aqueous alkaline solution→$M^{I}X'+2M^{II}Y'$+alkali or alkaline X, Y in solution for example
   $MgSO_4+Al_2(SO_4)_3+8NaOH(aq)\rightarrow$
   $Mg(OH)_2\cdot 2Al(OH)_3+4[Na_2^{+}SO_4^{=}]$, or,
   $MgCl_2+2Al(OH)_3+2NaOH$ aq→
   $Mg(OH)_2\cdot 2Al(OH)_3+2[Na^{+}Cl^{-}]$,

(it is to be understood that the equations given here represent the overal stoichiometry of the reaction and not necessarily the composition of a specific crystallite, that is the layered structure, is not here exemplified) which is washed with water or an aqueous alkaline solution (e.g. aqueous caustic), the solid separated and washed again. The product exhibits layered structures as aforedescribed. The product when dried and calcined at between about 400° and 1400°C forms a fine powder which by x-ray diffraction has the spinel structure $M^{I}M_2^{II}O_4$.

2. $2AM^{II}Y+M^{I}X$+alkaline solution+acidic solution→$M^{I}X'\cdot 2M^{II}Y'+[A^{+}X^{-}]$, A being alkaline ion, for example
   $2NaAlO_2+MgCl_2+NaOH(aq)+HCl(aq)\rightarrow$
   $(1+z)Mg(OH,Cl)_2\cdot 2Al(OH)_3+$
   $2z(Al(O)OH+Al(OH)_3)+[Na^{+}\ Cl^{-}]$,

followed by washing with or without added alkalinity, separation, washing the separated precipitate and drying.

3. $M^{I}X^{+}2M^{II}Y$+aqueous alkaline solution→$M^{I}(X)_2\cdot 2M^{II}(Y)_3+[A^{+}Y^{-}]$, for example
   $MgCl_2+2AlCl_3$+aqueous alkaline solution→
   $(1+z)Mg(OH,\ Cl)_2\cdot 2Al(OH)_3+$
   $2z(Al(O)OH+Al(OH)_3)+[Na^{+}Cl^{-}]$,

followed by treatment of the precipitate as aforedescribed.

4. $M^{I}X+2A\cdot AlY+HCl\rightarrow M^{I}X'\cdot 2\cdot AlY'+ACl$, A being alkaline ion, for example
   $MgCl_2+2NaAlO_2+HCl\rightarrow$
   $(1+z)Mg(OH,\ Cl)_2\cdot 2Al(OH)_3+$
   $2z(Al(O)OH+Al(OH)_3)+[Na^{+}Cl^{-}]$,

followed by treatment of the precipitate as aforedescribed.

Another technique for preparing the precursor is the comixing of finely divided aqueous slurries:

5. $M^IX$ or $M^IX \cdot nH_2O + M^{II}(OH)$ mixed as an aqueous slurry will after precipitation, recovery, drying and calcining followed by sintering, yield a spinel of the present invention, e.g., $MgCl_2 \cdot 2H_2O$, $Mg(OH)Cl$ or $Mg(OH)_2$ mixed with $Al(OH)_3$.

It is also to be understood that the powders produced in accordance with this invention can be pressed onto and into porous surfaces and sintered thereon to give protective spinel coatings or surfaces of similar acid/base resistance.

Detailed description of the invention

Example 1

One hundred fifty-nine liters of an aqueous solution of 7.5% by weight $Al_2(SO_4)_3$ and 2.5% by weight $MgSO_4$ was treated (mixed) with 117.7 liters of 8.26% NaOH containing 15.95% NaCl (a chlorine cell effluent) at a rate to provide a retention time of 28.5 minutes. Following the treatment of the sulfate solution the overflow containing a precipitate at 50°C was filtered under a six (6) inch mercury vacuum (20 kPa) and washed with 3 cake volumes of distilled water. The washed cake was 14.5% solids. This cake was dried to a powder and analyzed for mole ratio of aluminum to magnesium. The ratio was 2.1 to 1, respectively.

The powder was calcined at 1100°C for 3 hours. By x-ray diffraction analysis the calcined powder had acquired a spinel structure. Upon sintering at about 1700°C the powder acquired a density of 3.23 g/cc.

The following examples illustrate various modifications in the procedure of Example 1 employing various magnesium and aluminum compounds:

| Examples | 2 | 3 | 4 |
|---|---|---|---|
| Duration (min) | 130 | 168 | 350 |
| Reactants: | | | |
| a) Salt Solution | | | |
| wt. % Mg Salt ($MgCl_2$) | 8.41 | 2.05 | 10.18 |
| wt.% Al Salt ($AlCl_3$) | — | 5.7 | — |
| wt. % HCl | 3.55 | 2.37 | — |
| Vol. Liters | 19.3 | 55.15 | 24.05 |
| b) Alkaline solution | | | |
| Kind | $NaAlO_2$ | NaOH | $NaAlO_2$ |
| wt. % NaOH | 5.53 calc | 9.5 | 5.04 calc |
| wt. % $Al(OH)_3$ | 6.46 calc | — | 7.62 calc |
| wt. % NaCl | — | — | — |
| Vol. Liters | 33.6 | 56 | 49.5 |
| c) Acid solution | | | |
| Kind | — | — | HCl |
| wt. % HCl | — | — | 9.77 |
| Vol. Liters | — | — | 8.03 |
| d) Mol ratio Al/Mg | 1.62 | 1.99 | 2.0 |
| Precipitation @ 50°C | | | |
| pH $\bar{M}$ pptr. | 9.2—9.5 | 9—9.5 | 9.2—9.4 |
| retention time (min) | 22 | 21 | 61 |
| Filtration | | | |
| Vacuum inches Hg (abs.) | 6 | 6 | 6 |
| Load Rate gph/ft²/1" cake (grams per hour/0.09m²/2.5 cm cake) | 59 | 22 | 101 |
| Wash rate gph/ft²/1" cake (grams per hour/0.09m²/2.5 cm cake) | 30 | 14 | 68 |
| Wet Cake % solids | 21.5 | 16.0 | 27.2 |
| Dry washed cake | | | |
| wt. % $Mg(OH)_2$ | 22.55 | 24 | 25.0 |
| wt. % $Al(OH)_3$ | 63.5 | 72 | 75.4 |
| Mol Ratio Al/Mg | 2.11 | 2.24 | 2.26 |
| Density of calcined and sintered product gm/cc | — | 3.24 | 3.50 |

Density studies

The powder of Example 2 was calcined at 1000°C for approximately four hours and was pressed in a Beckman powder mold under various pressures to produce a 1-1/4 inch (3.2 cm) diameter by 1/2 inch (1.3 cm) thick tablet and thereafter sintered at either 1535°C or 1400°C and the average density thereof determined. The following table sets forth the results obtained:

| Pressure PSI (MPa) | Sintering Temperature °C | | Density gm/cc |
|---|---|---|---|
| | 1400 | 1535 | |
| 5,000 (35) | | " | 3.29 |
| | " | | 2.21 |
| 10,000 (70) | | " | 3.42 |
| | " | | 2.20 |
| 15,000 (105) | | " | 3.42 |
| | " | | 2.11 |
| 20,000 (140) | | " | 3.39 |
| | " | | 1.92 |

The data establishes that a sintering temperature of about 1535°C or above should be used to achieve the greatest densification and concommitant therewith a pressure of greater than or equal to about 8000 psig is also advantageous. Sintering below about 1400°C results in densification less than about 2/3 theoretical, 3.57 gm/cc being the theoretical density of the $MgAl_2O_4$ spinel, based on crystallographic unit cell data for the final product and literature data. Depending on the chemical composition, calcination history, powder processing methods and pressing and sintering techniques, sintering densities greater than 99% of the theoretical values were sometimes obtained.

The tablets pressed at greater than 5,000 psig (35 MPa, gauge) and sintered at 1535°C were subjected to contact with caustic beads at 1500°C or with 15% boiling hydrochloric acid. Neither treatment appeared to react or significantly affect the surface or strength of the tablet thus treated.

The magnesium aluminate spinels of this invention, either the calcined or the powdered or shaped fired spinels, have the ability to combine (even at relatively low temperatures) with other oxides, halides, hydroxides or coprecipitates of aluminum and other metals including, but not limited to, those of the transition metal series to yield products exhibiting altered properties. These properties include sinterability, stability to oxidation or reduction, strength, porosity and catalytic activity.

Examples 5—8 Mg-Al spinel precursor

Examples 5 and 6 are precursors that were produced at reaction conditions about identical to Example 4 described above. The reaction slurry was treated with a NaOH solution before filtering. The precursor had an excellent filter rate and a low cake solids content (18—20% solids). Its Al/Mg mole ratio was 2.01. The precursor sintered to very dense spinel after calcining at 1000—1200°C.

Example 8 was produced at a higher reaction temperature (60°C) and a longer retention time (4 hours) to improve filtration and drying properties.

The reaction slurry was concentrated by settling, NaOH treated, and filtered. The filter and dryer capacity were much improved over examples 5 and 6 due to a much higher cake solids content. Although the sintering properties of preliminary precursor Example 7 matched those of Examples 5 and 6, which were calcined at about 1000°C and sintered at about 1500°C subsequent sintering of Example 8 showed the need for a higher calcining temperature of about 1200°C to obtain high density spinel upon sintering (at ca. 1500°C) unless the precursor was upgraded by size reduction (ball milling or double compaction). The reason advanced was that Example 8 had an excess of aluminum in the precursor phase which formed a segregated aluminum oxide phase upon calcining. Aluminum oxide inhibits the sintering of the spinel phase as discussed later in Example 13, part 4.

| Example | 5 | 6 | 7 | 8 |
|---|---|---|---|---|
| Duration of run (hrs) | 29 | 28 | 20 | 65 |
| Reactants: | | | | |
| a) Salt solution | | | | |
| wt. % $MgCl_2$ | 10 | 10 | 9.94 | 10 |
| Vol. Gallons (liters) | 734 (2778) | 703 (2661) | 295 (1117) | 2030 (7684) |
| b) Alkaline solution | | | | |
| Kind $NaAlO_2$ | | | | |
| wt. % NaOH calc. | 1.13—1.19 | .89—1.15 | .87—1.25 | .7—1.0 |
| wt. % $NaAlO_2$ calc. | 8.04—8.34 | 8.37—8.76 | 8.71—7.91 | 8.2—8.7 |
| Vol. Gallons (liters) | 1525 (5772) | 1416 (5360) | 317 (1200) | 4096 (15503) |
| c) Acid Solution | | | | |
| Kind HCl | | | | |
| wt.% HCl | 8.8 | 10 | 10 | 9.7 |
| Vol. Gallons (liters) | 299 (1132) | 209 (791) | 123 (466) | 679 (2570) |
| d) Mol Ratio Al/Mg | 2.01 | 2.01 | 2.02—2.07 | 1.99—2.03 |
| Precipitation @ °C | 50 | 50 | 60 | 60 |
| pH $\bar{M}$ pptr: | 9.3—9.4* | 9.05—9.4* | 9.1—9.3* | 9—9.4* |
| Retention time (min) | 55—58 | 69—72 | 226—237 | 247—260 |
| Filtration | | | | |
| Load Rate gph/$ft^2$/1" cake (grams per hour/0.09$m^2$/2.5 cm cake) | 43 | 30—40 | 58 | 42 |
| Wash rate gph/$ft^2$/1" cake (grams per hour/0.09$m^2$/2.5 cm cake) | 24 | 25—30 | 56 | 23 |
| Cake % solids | 21.4 | 21—22 | 35.9 | 35—37 |
| Dry washed cake | | | | |
| wt. % $Mg(OH)_2$ | 26.0 | 26.2 | — | 26.4 |
| wt. % $Al(OH)_3$ | 75.1 | 72.1 | — | 76.0 |
| Density of calcined and sintered product gm/cc | 3.44—3.52 | 3.47—3.53 | 3.56 | 3.51 |

*range during run

The above data represents that obtained in the laboratory. The batches were large enough to employ a commercial-size filter and the cakes obtained by such use were also analyzed and used in various operations described in later examples. The data for each batch from the Moore filter cake were: Each slurry was treated with 10% sodium hydroxide and washed with raw (untreated) water.

| Example | 5 | 6 | 7 | 8 |
|---|---|---|---|---|
| Slurry wash | | | | |
| 10% NaOH gal/100 gal | 5 | 5 | 4.7 | 11* |
| Water (cake volumes) | 3 | 3 | 4 | 4 |
| (3.8 l aqueous 10 wt% NaOH solution/380 l water) | | | | |
| Cake-% solids | 18—20** | 18—20** | 35.9 | 34—36** |
| Dry solids | | | | |
| % $Mg(OH)_2$ | 26.0 | 26.2 | | 26.4 |
| Al $(OH)_3$ | 75.1 | 72.1 | | 76 |
| Sintered density at 1500+°C of sample calcined at: | | | | |
| 1000°C (2 samples) | 3.46/3.46 | 3.47/3.48 | 3.48<br>3.1—3.4 | 3.1—3.3/ |
| 1200°C | 3.46 | 3.49 | 3.56 | 3.1—3.5 |

*This run was settled and decanted before treatment with the caustic wash.
**ranges during run.

Example 9

Physical mixtures with other oxides/halides

The spinel powders $MgAl_2O_4$ of Examples 5 and 6 were calcined at 1000°C for approximately four hours and were then mixed in various amounts with other metal oxides or fluorides, pressed at 10,000 psig (70 MPa, gauge) and sintered at 1535°C to determine the effect these compounds would have on the densification characteristics of spinel.

In one experiment mixtures of calcined spinel powder and alpha-aluminum oxide were prepared by ball-milling. Pellets, 1-1/4 inch (3.2 cm) in diameter, weighing approximately 10 gms. each were formed at a pressure of 8,000 psig (56 MPa, gauge) composed of (1) pure alpha $Al_2O_3$, (2) pure spinel powder ($MgAl_2O_4$), as well as the following mixtures: (3) 90% $Al_2O_3$/10% $MgAl_2O_4$; (4) 75% $Al_2O_3$/25% $MgAl_2O_4$. All pellets were sintered for 2 hrs. at 1535°C. The percent volume reduction was as follows: (1) 11%, (2) 46%, (3) 17%, (4) 22%. As is seen from this data the spinel powder of the present invention can act as a densification aid when mixed with alpha aluminum oxide.

In another example, pellets, 1-1/4 inch (3.2 cm) in diameter, weighing approximately 10 gms each, were formed at 8,000 psig (56, MPa, gauge) using ground powder composed of (1) pure MgO, (2) 90% MgO/10% $MgAl_2O_4$ (calcined powder of example 2), (3) 75% MgO/25% $MgAl_2O_4$ (calcined powder of example 2). All pellets were sintered for 2 hours at 1535°C. Theoretical densities, measured densities and the percent of the theoretical density obtained are given below. The theoretical density of the composites was calculated from a weighted average of the theoretical densities of the pure components. MgO and $MgAl_2O_4$ are almost identical in theoretical density.

| | (a) | (b) | (c) |
|---|---|---|---|
| % MgO | 100 | 90 | 75 |
| % Spinel $MgAl_2O_4$ | 0 | 10 | 25 |
| Theoretical Density (gm/cc) | 3.59 | 3.59 | 3.59 |
| Measured Density (gm/cc) | 2.41 | 2.64 | 2.82 |
| % of theoretical obtained | 67% | 74% | 79% |

As is seen from this data the spinel powder of the present invention acts as a densification aid when mixed with magnesium oxide under these conditions. An alternate way to look at the data is that substantial amounts of MgO or $Al_2O_3$ will inhibit the densification of spinel powder. This behavior can be beneficial in the manufacture of catalyst supports where porosity is desirable.

In another example small amounts of lithium fluoride were ground together with the calcined spinel of Examples 5 and 6 and 1-1/4 inch (3.2 cm) diameter pellets, weighing approximately 10 gms each, were formed at 8,000 psig (56 MPa, gauge) and fired for 2 hours at 1535°C. The measured density obtained, calculated theoretical densities determined as before, and the percent of theoretical density calculated are given below for the compositions indicated. The density used for LiF was 2.635 gm/cc.

| | (d) | (e) | (f) |
|---|---|---|---|
| % spinel ($MgAl_2O_4$) | 100 | 99.5 | 99 |
| % LiF | 0 | .5 | 1.0 |
| Theoretical density (gm/cc) | 3.58 | 3.57 | 3.56 |
| Measured density (gm/cc) | 3.27 | 2.73 | 2.62 |
| % of theoretical obtained | 91% | 76% | 74% |

As is seen from the data small amount of LiF greatly inhibits the densification of magnesium aluminate spinel.

In the three examples discussed above it was shown that the densification properties of the spinel powder of this invention can be altered through the addition of various other oxides or halides. In the case of MgO and $Al_2O_3$, the moderating agent remained substantially as a segregated phase, as shown by analytical investigation. The fate of the LiF was not determined.

Solid solutions with other oxides

In addition to physical mixtures, the spinel powder of this invention can also form solid solutions with other metal oxides. This ability can be used to alter the characteristics of the resultant system in unique ways. The metal oxides which can be used to form mixed spinel systems include, but are not limited to, members of the transition elements. For example, mixtures of hematite ($Fe_2O_3$) and the calcined spinel powder ($MgAl_2O_4$) were pressed and sintered at ~5,000 psi (~35 MPa) and 1535°C. The resultant products showed a single spinel phase whose cell constants varied in accordance to the composition of the original mixed powders. This relationship holds for the entire series of combinations whose end members are magnesium aluminate ($MgAl_2O_4$) and magnetite ($Fe_3O_4$). The original hematite is incorporated into the spinel lattice involving a reductive alteration of some of the $Fe^{+3}$ to $Fe^{+2}$—even in air at 1535°C, whereas hematite not mixed with the spinel, stays in the trivalent state as $Fe_2O_3$ when fired at 1535°C in air. A regular progression of densities is noted, as would be expected.

As discussed below, the atmosphere employed plays a role in determining whether a homogeneous phase is observed versus a mixture of phases.

Example 10

Physical mixtures of hematite ($\alpha$-$Fe_2O_3$) and the calcined powder of this invention ($MgAl_2O_4$) from Examples 5 and 6) were made by ball-milling the powders together in the following ratios by weight: 90% $MgAl_2O_4$/10% $Fe_2O_3$; 80% $MgAl_2O_4$/20% $Fe_2O_3$, etc., up to 10% $MgAl_2O_4$/90% $Fe_2O_3$. Ten gram pellets of each of the above compositions were pressed at 5,000 psi (35 MPa) and sintered at 1535°C under argon for 2 hrs. The resultant material was shown to be a single phase spinel of the type $Mg_x^{+2}Fe_{1-x}^{+2}Al_{2-y}^{+3}Fe_y^{+3}O_4$ by high resolution x-ray diffraction and measurement of the magnetic properties of the samples. The cubic cell parameter determined from the diffraction data was found to vary linearly from ~8.08 Å (~0.808 nm) for pure $MgAl_2O_4$ to ~8.40 Å (~0.840 nm) for pure $Fe_3O_4$. In cases where sintering of the above compositions was carried out in air instead of argon a homogeneous mixed spinel was again observed by x-ray diffraction in cases where the iron oxide content was less than about 40% by weight, but for higher levels of iron oxide in the starting materials a separate $Fe_2O_3$ phase was seen in addition to one or more mixed magnesium aluminum iron spinels.

In addition to pressed pellets one inch (2.5 cm) in diameter, a larger refractory shape (6×4×1 inches i.e. 15×10×2.5 cm) was pressed and fired at 1535°C. No cracking or delamination was observed. In this case two magnesium aluminum iron spinels were observed by x-ray diffraction with different cell constants. This indicates a difference in the magnesium/aluminum/iron ratio.

It is possible to produce a spinel phase incorporating magnesium, aluminum and chromium whose cell constant varies as a function of the chromium content. Sometimes separate hexagonal phase(s) of the corundum structure ($Al_2O_3$) are also formed, depending on the manner in which the chromium was introduced and the thermal treatment which followed. These may be segregated as chromium oxide ($Cr_2O_3$) and aluminum oxide ($Al_2O_3$) phases or as solid solutions of the corundum type ($Al_xCr_{2-x}O_3$). In general, rapid heating and/or poor mixing increases the tendency to form such segregated phases. The surest way to form a homogeneous spinel is to add chromium at the coprecipitation step. This leads to a precursor hydroxide incorporating chromium. Alternatively, coprecipitated gel of the hydroxides of chromium and aluminum can be prepared and this product mixed, either as dry powder or as a wet slurry, with the precursor or the calcined spinel powder of this invention.

Example 11

Approximately 18 lbs. (8 kg) of a coprecipitated magnesium, chromium, aluminum hydroxide were prepared in a manner similar to those outlined in examples 2—4. Data concerning the formation of a

ceramic body from this product as well as that using the post addition method are given under "Examples of Applications".

X-ray diffraction, electron microscopy and micro energy dispersive x-ray fluorescence indicate a layer hydroxide of magnesium aluminum and chromium, which is less crystalline than that observed for examples 2—4, and segregated aluminum hydroxide phase(s).

| | |
|---|---|
| Example 11 | |
| Duration (hrs) | 5.5 |
| Reactants: | |
| a) Salt solution | |
| wt. % Mg Salt ($MgCl_2$) | 7.42 |
| wt. % Cr Salt ($CrCl_3$) | 2.57 |
| Vol. Gallons (litres) | 36.4 (138) |
| b) Alkaline solution | |
| Kind $NaAlO_2$ | |
| wt. % NaOH calc. | 0.95 |
| wt. % $NaAlO_2$ calc. | 8.25 |
| Vol. Gallons (litres) | 55.6 (210) |
| c) Acid solution | |
| Kind HCl | |
| wt. % HCl | 10 |
| Vol. Gallons (litres) | 3.1 (11.7) |
| d) Mol Ratio Al/Mg | 1.99 |
| Precipitation @ 50°C | |
| pH ($\bar{M}$ pptr.) | 9.6—9.7 |
| Retention time (min) | 61 |
| Filtration | |
| Vacuum inches Hg (abs.) | 24 (80 kPa) |
| Load Rate gph/ft²/1" cake (grams per hour/0.09 m²/2.5 cm cake) | 2.5 |
| Wash rate gph/ft²/1" cake (grams per hour/0.09 m²/2.5 cm cake) | 21 |
| Cake % solids | 20 |
| Density of calcined and sintered product gm/cc @ 1500°C | 3.29 |

Examples of applications

Refractory shapes

The spinel of the present invention can be used to make a dense single-phase magnesium aluminum oxide refractory shape. For example, 2500 grams of the calcined material is placed in a rectangular die. The die is closed and evacuated for nominally 30 minutes. The powder is pressed to a pressure of 8000 psi (56 MPa) using a hydraulic press. Upon removal from the die, the brick has a green size of about 2.25"×7"×8" (5.7×17.8×20.3 cm). The brick was sintered at 1535°C for 6 hours to obtain a finished product measuring about 1-1/2"×4-1/2"×5-1/2" (3.8×11.4×14 cm) with a density ≧95% of the theoretical value for a perfect spinel crystal.

Spray drying

It is possible to avoid evacuation of the mold by spray drying the calcined powder using established techniques. For example, 25 lbs. (11 kg) of the spinel powder of example 2 were spray dried using standard binders, plasticizers, and defloculating agents at a commercial facility. This spray dried powder was pressed into brick using conventional, commercial technology at a rate of less than or equal to 30 seconds per brick.

Refractory shapes with substitution

Two different types of chrome doped spinel bricks were formed using a single action dry pressing mode. The first used a coprecipitated chromium aluminum hydroxide added to the spinel precursor of example 8. Specifically, 500 grams of coprecipitated chromium aluminum hydroxide (Cr/Al≅1.0) were added to 1500 grams of precursor and dry ball milled for two hours. The product was then calcined to

1200°C and held at that temperature for two hours. Afterward, the calcined material was remilled for two hours.

A brick shape was produced by placing the powder in a steel mold (coated with oleic acid), applying vacuum for one hour and pressing at approximately 9700 psig (67 MPa, gauge). The chrome spinel brick was then sintered to 1535°C at a rate of 100°C rise per hour. Holding time at 1535°C was four hours. The fired density of this spinel brick was 3.34 gm/cc. From high resolution x-ray diffraction, the approximate composition of the solid solution is $MgCr_{0.2}Al_{1.8}O_4$.

Another type of chrome brick makes use of the coprecipitated magnesium-chromium-aluminum precursor hydroxide of example 11.

The hydroxide precursor was first calcined at 950°C and held at that temperature for six hours. Once cooled, the material was dry milled for one hour and then wet milled for 45 minutes. Additives for wet milling consisted of deionized water, 0.5% polyethylene glycol (on dry weight chrome-spinel basis) having an average molecular weight of about 200, and 4% Gelvatol® resin grade 20—30 (Poly Vinyl Alcohol) made by Monsanto Plastics and Resin Company. After drying the material at 125°C for 30 hours, the dried mass was fragmented by hand and ball milled for 1-1/2 hours. This milled chrome-spinel powder was also dry pressed at 9700 psi (67 MPa) and sintered to 1535°C. Holding time at 1535°C was six hours. Initially the heating rate was 38°C per hour to a set point of 400°C, then changed to 100°C per hour. Fixed density of the chromium doped spinel refractory shape was 3.29 grams per cubic centimeter.

In both cases discussed above high resolution x-ray diffraction of the final product revealed a single phase magnesium-chromium-aluminum spinel whose lattice constant is larger than that of pure $MgAl_2O_4$. This lattice expansion and the absence of segregated phases indicates substitution of chromium into the spinel crystal lattice. In other cases where poor mixing or rapid heating was employed segregated phases were observed, as discussed previously.

Example 12 (mortar/coating)

As an example of another aspect of this invention, a mortar or refractory coating can be made in the following way. Thirty (30) grams of finely ground spinel precursor, example 5, was slowly added while stirring, to 70 grams of 15% phosphoric acid ($H_3PO_4$). Heat evolution will be noted as the acid base reaction proceeds. This mixture is then heated to ~90°C for several hours. A grit is then added to produce the desired consistency. This may be, for example, the calcined spinel powder or sintered grain of the present invention or another suitable refractory oxide. A typical combination would be 60 grams of calcined spinel powder with 20 grams of the above slurry. Distilled water may be used to adjust the consistency. Upon air drying for several days this mortar has excellent green strength but remains water dispersible. It can be cured to a water impervious form by firing at high temperatures of 500°—1000°C for several hours.

Example 13 (catalyst supports)

(1) As an example of a pure spinel catalyst support, 50 grams of the loosely packed spinel precursor of the present invention was sintered to 1535°C for two hours. The resultant porous form has a total porosity of about 26% by mercury intrusion with approximately 90% of these pores in the 2—10 μm range. Similarly, sintering of 50 grams of the precursor for two hours at 1700°C yielded a strong porous body of 26% porosity which also had greater than 90% of the porosity in the 2 to 10 μm range. The time and temperature can therefore be used to adjust the physical strength of the support with only small shifts in the pore size distribution.

(2) Catalyst supports can be made from the spinel precursor of the present invention by slurry or slip-casting techniques. For example, 50 grams of the precursor is mixed with 100 grams of water. A small amount of nitric acid (approx. 2 ml) can be added to aid in mixing. The resultant "mud" can be placed in a form or preferably extruded or rolled into the desired shape. The forms are dried at approximately 100°C for several hours. The "green" forms are then sintered at approximately 1700°C to obtain a pure spinel support with ~30% porosity by mercucy intrusion and the aforementioned pore size distribution (2—10 μm). Alterations in the rate of drying, amount of water used, firing temperature and particle size of the initial powder can be made to change the porosity and pore size distribution.

(3) Adjustments of the total porosity and pore size distribution can be made by incorporating a burn-out agent into the powder prior to sintering. For example, 50 grams of the spinel precursor of the present invention is mixed with 5 grams of Methocel® and 150 grams of water. The resultant paste is shaped and dried for several hours at 100°C. The dried forms are sintered at 1535°C for two hours. The resultant support has a porosity of approximately 32% but with the pore size distribution shifted to larger pores than previously cited (5—20 μm). More specifically, 20% of the pores are now in the 10 to 20 μm range. Heavier loadings of Methocel®, for example up to 40% by weight, can be used to increase total porosity at some sacrifice in strength.

(4) The porosity of the support made from the spinel of the current invention may be adjusted by adding a non-sintering (prefired) grain to the mix. For example, 100 grams of the calcined precursor is mixed by ball-milling, with 100 grams of nominally 5 micron alpha alumina ($\alpha$-$Al_2O_3$). The resultant physical mix is sintered at 1700°C for 2 hours to produce a hard composite support with approximately 40% porosity with the pores being largely in the 2 to 10 μm range. Similarly, non-sintering grain can be added in the form of hard burned spinel by presintering the spinel of the present invention and grinding to the

desired size if a totally spinel system is desired. The addition of conventional binders (e.g., sodium silicate) may be necessary in these cases to achieve satisfactory pellet strength.

While pressure molding techniques are commercially desirable for large shapes such as fire brick and the like, it would be advantageous to be able to slip-cast the spinel powders by drain casting for use in making intricate shapes such as furnace ware, crucibles and the like as well as solid casting for preparing bricks or the like.

In accordance with another embodiment of the present invention a precipitate of metal hydroxides or compounds convertible to the hydroxide in metal atomic proportions of $M^I/2M^{II}$, e.g. $Mg \cdot Al_2OH_8$, is calcined at a temperature of from 400°C to 1400°C during which period the hydroxide form is converted to the spinel structure $M^IM^{II}{}_2O_4$. This calcined product is then slurried in water employing an amount of de-flocculating agent which is a salt of a polyelectrolyte in an amount and kind such as to yield a well dispersed, solid phase in the water, and a pH of slurry of about 9, with or without a conventional binding agent for slip-casting. The resulting slurry having a solids content of from 10 to 75 wt.% can be slip-cast, as for example, by drain casting into water-porous molds wherein the solids build up on the mold walls. After achieving the desired wall thickness the liquid remaining in the mold cavity is poured out and the mold left to dry until the green strength of the casting has matured to enable removal of the mold. Following removal from the mold the "green" casting is dried in air at room temperature or forced air or even excitation drying (microwave), or other internal to external drying process. Thereafter, the "green" casting is heated (hereafter referred to as "sintered", that is, subjected to heat for a period of time to achieve a stable density at that temperature of the solid shape) to above 1500°C for from 1 to 20 hours during which time the spinel densifies and the casting dimensions may be reduced by up to 50%. The resulting object comprises a 100% spinel composition with no binders or other organic materials being present since such binders or materials are decomposed under the extreme heat. The article has all of the expected characteristics of the spinel and is a substantially non-porous body having heat and cold shock resistance, (i.e. resistance to sudden changes in temperature) inertness to oxidation and reduction at temperatures below its melting point and resistance to acid and base attack.

It is of course to be understood that while slip-casting has been described, centrifugal-casting or other forms of drain casting from slurries can be employed with equal success. In addition, solid casting from slips has produced useful forms, i.e. bricks.

Suitable polyelectrolytes, useful primarily as de-flocculants but having some binding tendency, are those alkali metal and ammonium salts of carboxylated polyelectrolytes such as Darvan® No. 7 Darvan® C, respectively, manufactured by R. T. Vanderbilt Company, Inc. which can produce a pH of solution or slurry of about 9 and below, and their equivalents known in the art.

It is usually advantageous to add such deflocculants and other dispersants such as Triton® X-100 and HCl (pH 2 or greater), and molding aids such as the algins and the like.

Good results have been achieved when using 10 to 75% solids in water and from 0.1 to 4 weight percent of a deflocculant with or without a mold aid such as an alginate, Keltex® for example. The solids content is preferably from 0 to 90% by weight sintered spinel and from 10 to 100 percent by weight spinel calcined at a temperature of from 900°C to 1400°C. Some part of the calcined material may also be replaced with spinel calcined at a temperature of from 400° to 900°C to control porosity if such is desirable. Of course, mixtures of metals, metal oxides and mixtures of different metal spinels may also be used as the solids content.

Slip casting

A calcined $MgAl_2O_4$ spinel powder, prepared according to the previous procedures, is ballmilled with water and the enumerated dispersants/deflocculants added. The slip is re-ballmilled and then poured into various molds; which had the ability to absorb water from the slip. When the slip has built up on the wall of the mold to the desired thickness the excess liquid in the mold is poured out and the mold with its lining of slip solids is set aside for a period of time to further dry and gain strength accompanied by a shrinkage away from the mold which can be controlled by the amount of sintered spinel used in the slip. When the strength of the solids is sufficient the mold is parted and the green shape removed and further slowly dried . Thereafter the green shape is sintered at a temperature above 1400°C, preferably above 1500°C, for several hours. The final product is a translucent body of about one-half the dimension of the green shape and will have density of between 95 and 99% of the theoretical density for the spinel.

Solid casting

The present invention also contemplates using solid casting techniques wherein the slurries can vary in solids content and the ratios of the calcined to sintered spinel particles in the slurry can vary from 10% to 100% by weight calcined spinel to 90% to 0% by weight sintered spinel depending upon the nature of the shape and its intended use. For example, a fire brick for use in a coal fired boiler can be prepared by mixing from 10 to 60 percent by weight of calcined spinel with from 90 to 40 percent by weight sintered spinel (spinel which had been calcined at a temperature of 1400°C and thereafter in granular or powder form sintered at a temperature above about 1500°C) with the appropriate deflocculants and/or molding aids and water to produce a 40 to 60 percent solids slurry with or without porosity control agents being added and solid casting techniques employed to produce a shape capable of being fired.

Various dispersing agents which have the ability to prevent flocculation of the fine particles of calcined spinel were used to determine their effectiveness.

Initially, slips were experimentally prepared using various recognized slip molding aids such as Triton® X-100 (dispersant), Carbopol® 934 and Keltex® (alginate). Castings formed from use of these aids were poor and all the castings cracked. This is believed to have been caused by the absence of a binder or deflocculant and the foaming action of some of the above agents.

In another experiment 80 cc of Keltex® as a 0.5% solution; 5cc Carbopol® 934 as a 1% solution; 4.5 grams Darvan® 7; 65 cc water and 100 grams of the spinel ($MgAl_2O_4$) powder calcined at a temperature of 1300°C were well mixed. The slurry had a pH of 8—9. The slurry was poured into a cube mold treated with 0.2% Keltex® as a mold release agent and set aside to dry. The casting shrank away from the mold sides and was easily removed. No cracks appeared at any surface.

Still another slurry was prepared, comprising 160 g of a 0.5% aqueous Keltex® solution; 4.5 g Darvan® 7 and 100 g of spinel powder calcined at a temperature of 1300°C. The slurry was well mixed, poured into a cube mold treated with 0.2% Keltex® mold release agent. The drain cast method was employed. A one hour casting time followed by decanting of the remaining liquid, resulted in a 3/32 inch (2.4 mm) wall thickness of the five sided open top cube form. Although the casting cracked at the interior corners on drying following removal from the mold the outside corners remained sharp and the casting was thereor still satisfactory.

The following composition was prepared and used to cast several shapes.

| | |
|---|---|
| 6160g | Keltex® 0.5% solution |
| 119 g | Darvan® C |
| 209 g | Darvan® 7 |
| 6317.6 g | spinel powder (calcined at 1200°C) |
| 2235.8 g | spinel powder (sintered at 1535°C) |

The spinel powders were ballmilled together for 26 hours, then the liquids were added and ballmilling continued for 36 hours. Seven days later the slip was used to cast, by the cast-drain technique, a furnace crucible, a cup mold prepared from a foam hot-cold beverage cup, each from plaster-of-paris; three commercial molds, a mug with handle, a mug with separate handle mold and a bowl each from No. 1 pottery clay. The castings were made at about 1 hour casting time followed by slip decanting and drying in the mold for about 2 hours before removal of the casting from the mold. The casting was dried overnight at room temperature then two days at 120°C and ultimately sintered at a temperature of about 1535°C. The castings densified to about the theoretical density for the spinel and were reduced in all dimensions to about one-half the unsintered dimensions. Articles made from these castings were translucent and crack free with the exception of the mug with handle attached which lost the handle due to shrink cracking on removal from the mold.

Ten days later, twenty-three days after the slip was prepared, castings were attempted with no success. The apparent reason is the suspected breakdown of the Keltex® (sodium alginate). This experiment suggests a preservative is necessary if the casting operation is to be carried out over an extended period of time (severals days to weeks) after the slip has been made.

Another slip was prepared using

| | |
|---|---|
| 328 g | Darvan® 7 |
| 6160 g | Keltex® 0.5% solution |
| 2236 g | spinel powder (sintered at 1535°C) |
| 6318 g | spinel powder (calcined at 900°C) |

Again the dry powder spinels were ballmilled together for 24 hours, the remainder of the ingredients added and the resulting mixture ballmilled for 24 hours then aged for one week. Thereafter, the slip was used to cast a cup and a bowl. Castings cracked on drying in the mold before removal and after removal. Analysis of the grain size and shapes of the ballmilled slurry solids and the previously prepared slurry solids showed the former to be sharp edged whereas the latter were smoother, more round in character. The conclusion drawn from this experiment is that the calcined material must be calcined at a temperature above 900°C and preferably at a temperature of from 1200°C to 1400°C to obtain the more round powder particles.

In still another experiment a slip was made using 328 grams of Darvan® 7 only; 8553 g spinel calcined at a temperature of about 1200°C and 6160 g 0.5% Keltex® solution. The castings cracked. Modification of this recipe to include a sintered spinel was no more successful. Further modification of the recipe to include Darvan® C in addition to Darvan ® 7 proved successful.

In addition, using the scrap obtained by pulverizing either calcined or sintered scrap pieces as well as wet green castings redispersed, and employing a deflocculating agent, a small amount of water and ballmilling the slip for about 24 hours, good castings were prepared, dried and sintered. Vacuum decanting is advantageous since the "decant-line" does not form.

$Mg(Cr\text{-}Al_2)O_4$ was prepared in accordance with example 11 having the formula $MgAl_xCr_{2-x}O_4$ and used in the following manner in accordance with the present invention.

| | |
|---|---|
| 635 g | $MgAl_xCr_{2-x}O_4$ (calcined at 1400°C) |
| 25 g | Darvan® C |
| 2.8 g | Keltex® (sodium Alginate) |
| 450 g | $H_2O$ |

was ballmilled for 16 hours then slip cast. The material cast easily and on sintering produced a crack-free cup without handle. Shrinkage was about 50%, density about theoretical.

The same formulation was used except that $MgAl_2O_4$ was substituted for the $Mg(CrAl)_2O_4$

| | |
|---|---|
| 653 g | $MgAl_2O_4$ (calcined at 1400°C) |
| 25 g | Darvan® C |
| 2.8 g | Keltex® |
| 450 g | $H_2O$ |

This slip also cast satisfactorily. The castings sintered to a density of 92% of theoretical.

This system of slip casting can be employed with any type of one, two or more metal spinels if the material is coprecipitated and properly calcined. Also spinels combined with other ceramic materials capable of forming a slurry can be slip cast. Examples of other materials are various oxides ($Al_2O_3$, $SiO_2$, $ZrO_2$ Kaolin, etc.) as well as oxides, such as MgO, that hydrate can be cast using cold water and allowing the material to age (hydrate) before casting. The additive oxide powders that hydrate should have low surface area too.

In another experiment, a spinel of the general formula $M^{I}M_2^{II}O_4$ prepared in accordance with the procedures set forth above was calcined at a temperature of from about 400°C to 1400°C, and preferably from 900°C and 1400°C, and a portion thereof sintered at a temperature above about 1500°C and the mixture slurried in water with the aid of the aforementioned anti-flocculants. The slurry was preferably an aqueous slurry having a solids content of from 50 to 75% by weight and more preferably from 60 to 70% by weight.

The sintered spinel (i.e. the calcined spinel above described further heated to a temperature above about 1500°C for from 1 to 20 hours to complete densification) may be added to the slurry in amounts of from 0 to about 67% by weight of the total solids content of the slurry.

Likewise the precipitate for said spinels above set forth can be incorporated into the slurry to the extent of about 33% by weight of the total solids content of the slip.

It is to be understood that other metal oxides may be added to alter the densification of the finally sintered spinel structure and reduce shrinkage of the slip casting during sintering.

It is also to be understood that two or more different spinel compositions or precursors can be employed to prepare the slip, for example a $Mg(Cr \cdot Al)_2O_4$ spinel can be used instead of the $MgAl_2O_4$ in part or in whole. Further $(MgFe)(Al \cdot Fe)_2O_4$ spinels can be employed as the only spinel or as a component of a composite spinel slip composition.

One major difference of using the spinels of the present invention over previously prepared spinel slips is that organic binders are not necessary to obtain the green strength of the casting.

In another experiment, a Mg/Al spinel was prepared in accordance with the above procedure having an Al to Mg ratio of 2.05, by analysis. The spinel was calcined at a temperature of 1300°C and used in the manner hereinafter described.

130 Grams of the calcined spinel was mixed with 78 grams of water and 15 grams of 25% active Darvan® 7 and milled in a ball mill for 1 hour. Thereafter the slip was cast into a 2-inch (5 cm) rectangular plaster mold. The casting demolded without cracking.

In a similar manner a spinel having an Al/Mg ratio of 1.99 and calcined at a temperature of 1000°C was formulated as above, milled then cast. The slip was slower to release and was difficult to demold.

Several additional slips were prepared employing precursor, calcined precursors of various heat history and calcined/sintered precursors. Good slips were prepared using Darvan® 7, 25% active, and the enumerated weight percent of the various forms of the precursor, calcined, and sintered precursor.

GRAMS

| Precursor | Calcined (°C) | (°C) | Sintered | $H_2O$ | Darvan® 7 25% act. |
|---|---|---|---|---|---|
| 5 | 5 (1000) | — | 5 | 13.3 | .7 |
| 4.3 | 8.5 (1000) | — | 22.6 | 14.1 | 1.7 |
| — | 7.5 (1000) | 3.8 (500) | 20 | 12.5 | 1.5 |

**Claims**

1. A coprecipitate comprised of a layered crystallite having the structure

$$\begin{array}{c} M^{II} \quad {}^{c}_{d}Y^{d}_{c} \\ \hline M^{I} \quad {}^{a}_{b}X^{b}_{a} \\ \hline M^{II} \quad {}^{c}_{d}Y^{d}_{c} \\ \hline \end{array}$$

wherein $M^I$ represents one or more metal cations having valence(s) a, $M^{II}$ represents one or more metal cations, at least one of which is different from $M^I$, having valence(s) c different from a, $M^I$ and $M^{II}$ being selected from the group consisting of Li, Mg, Zn, Al, Cr, and mixtures thereof;

X and Y each represent one or more anions having valences b and d, in charge balance with a and c, respectively, and being selected from the group consisting of $OH^-$, $F^-$, $Cl^-$, $SO_4^=$, $OCOCH_3^-$, $CO_3^=$, $HCO_3^-$, and mixtures thereof;

the molecular ratio of $M^IX$ to $M^{II}Y$ being $(1+z)M^IX \cdot 2M^{II}Y$ where z≧zero but less than 3; and sufficient segregated phases of the formula $M^{II} \cdot O \cdot Y$ and/or $M^{II}Y$ to provide an overall stoichiometry of about $M^IX \cdot 2M^{II}Y$.

2. The coprecipitate of claim 1 having the structure

$$\begin{array}{c} Al(OH)_3 \\ \hline (1+z)Mg(OH)_2 \\ \hline Al(OH)_3 \end{array}$$

and at least one segregated phase of the formule $AlO(OH)$ and/or $Al(OH)_3$ wherein the overall stoichiometry of the precipitate is about $MgAl_2(OH)_8$.

3. The coprecipitate of claim 2 wherein z is about 1 and sufficient $AlO(OH)/Al(OH)_3$ is present such that the Al/Mg ratio in the overall coprecipitate is about 2 to 1.

4. The coprecipitate of any one of the preceding claims wherein substantially all X and Y's have been converted to OH's by caustic treatment.

5. The coprecipitate of claim 1 wherein $M^I$ is Mg, $M^{II}$ is a mixture of the metal cations $Cr^{+++}$ and Al in a ratio of between 1 to 9 to 9 to 1 respectively, X and Y are OH and the Mg to Al-Cr ratio is about 1 to 2.

6. The coprecipitate of anyone of claims 1 to 5 prepared by coprecipitating from solution the dissolved $M^IX$ and $M^{II}Y$ at the lowest pH at which precipitation will occur for the desired components, $M^{II}Y$ and $M^IX$ being present in a ratio of from 1.8 to 1 to 2.2 to 1, respectively at a temperature of from 20°C to 100°C.

7. A method for preparing a spinel by calcining a coprecipitate as claimed in any of the preceding claims at a temperature of 400—1400°C and, optionally, sintering said calcined spinel at a temperature above 1500°C.

8. The method of claim 7 wherein, prior to heating, the precipitate is washed with water or an alkaline solution, the precipitate is recovered and dried, and the dried coprecipitate is heated to a temperature of from 1000 to 1200°C.

9. The method of claims 7 or 8 wherein a spinel having a density equal to or greater than 50% of the theoretical density of the spinel is formed by sintering at a temperature of greater than 1500°C.

10. The method of claim 9 wherein the spinel is densified to a density equal to or greater than 90% of the theoretical density of the spinel.

11. The method of claim 7, wherein the coprecipitate to be subjected to calcining is prepared by mixing $M^IX$ and $M^{II}Y$ as an aqueous slurry maintained at a pH of from 8 to 10, washing the mother liquor and precipitate with water or an alkaline solution, separating the solids from the mother liquor-wash liquor, washing the solids with water, and drying.

12. A method for preparing a coprecipitate as defined in claim 1, comprising the steps of coprecipitating from a solution the dissolved $M^{I}X$ and $M^{II}Y$ at the lowest pH of the solution at which precipitation will occur for all components, the coprecipitation being carried out in a continuous flow reactor whereby the precipitate is continuously removed, maintaining $M^{II}Y$ and $M^{I}X$ in the ratio of 1.8 to 1 to 2.2 to 1, respectively at a temperature of from 20°C to 100°C, washing the mother liquor and the precipitate with water or an alkaline solution, separating the precipitate from its mother liquor, washing the so treated precipitate, and drying the precipitate.

13. A method for preparing a spinel powder capable of densification under heat by calcining the product obtained by the method of claim 12 at a temperature of from 400°C to 1400°C thereby to produce a spinel of the structure $M^{I}M_2^{II}O_4$ of a density less than theoretical.

14. A method for preparing a dense spinel by sintering the product obtained by the method of claim 13 at a temperature of greater than 1500°C with or without first pressing it.

15. The method of claim 13 including the step of compressing the spinel powder at a pressure of from 35 to 350 MPa gauge into the desired shape and sintering the so shaped article at a temperature above 1500°C for a period of time of from 5 minutes to 100 hours.

16. The method of claim 13 including the step of shaping the spinel powder with or without the use of binders which may be etchable, combustable, meltable, or vaporizable, said shaping being done under pressure, sintering said shaped article at a temperature above 1500°C, and washing, etching and/or vaporizing any remaining additive to produce a porous shaped article in which the particles are highly densified and joined to each other.

17. A method for preparing a casting composition, comprising the steps of preparing a spinel powder by calcining a coprecipitate as claimed in any of claims 1—6 at a temperature of 400—1400°C, and combining said calcined spinel with water and a deflocculating agent to form a substantially stable dispersion of the spinel powder which comprises from 10 to 75% by weight of the spinel.

18. The method of claim 17 wherein

1) at least 10 percent of the spinel powder used is a coprecipitate precursor calcined at a temperature of greater than 900°C and up to 1400°C;
2) up to 90% of a precalcined coprecipitate precursor sintered at a temperature above 1500°C; and
3) the balance, if any, of a coprecipitate precursor calcined at a temperature of from 400°C to 900°C.

19. The method of claimed 17, wherein

1) from 0 to 25 weight percent of a spinel powder sintered at a temperature of about 1500°C;
2) from 10 to 50 weight percent of a spinel powder calcined at a temperature greater than 900°C and up to 1400°C;
3) from 25 to 90 percent by weight of water;
4) from 0.2 to 4 percent by weight of a mold aid; and
5) from 0.1 to 4 percent by weight of a deflocculating agent; are used.

20. The method of claim 19 wherein said mold aid is an alginate and said deflocculant is a polyelectrolyte.

21. The method of claim 17, wherein at least 10 weight percent of the spinel powder used is a coprecipitate precursor calcined at a temperature of from 900°C to 1400°C; up to 90 weight percent of the precalcined coprecipitate precursor is sintered at a temperature above 1500°C; and the balance, if any, is a magnesium-aluminum coprecipitate comprised of a layered crystallite having the structure

$$\frac{Al(OH)_3}{\frac{(1+z)Mg(OH)_2}{Al(OH)_3}}$$

and at least one segregated phase of the formula $AlO(OH)$ and/or $Al(OH)_3$ wherein the overall stoichiometry of the precipitate is about $MgAl_2(OH)_8$.

22. The method of claim 17 wherein said Mg/Al coprecipitate is less than 15 weight percent of the composition.

23. The method of claim 17 comprising the step of preparing a low viscosity slurry of a mixture of spinel precursor calcined at a temperature of from 400°C and 1400°C and the same or a different spinel or batch of precursor calcined and then sintered at a temperature above 1500°C, the calcined spinel being present in an aqueous slurry in an amount of from 10 to 100% by weight of which up to 33% by weight of the total composition may constitute the precursor, and from 0% to 67% by weight may constitute the sintered spinel, said spinels being present in said slurry to provide from 50 to 75% by weight solids content, the balance being water, and from 0.1 to 5% of an anti-flocculating agent.

24. The method of claim 23 wherein said spinel is $MgAl_2O_4$.

25. The method of claim 23 wherein said spinel is $MgAl_2O_4$ and the composition comprises about 33% by weight each of said precursor, a spinel calcined at a temperature of above 900°C, and a sintered spinel.

26. The method of claim 23 wherein said spinel is $MgAl_2O_4$ and the composition comprises about 63.8% by weight of a sintered spinel, 24% by weight of a spinel calcined at a temperature above 900°C, and 12.1% by weight of a spinel calcined at a temperature of from 500°C to 900°C.

27. An article prepared by casting the composition obtained by the method of any one of claims 17 to 26 and sintering the so cast shape at a temperature above 1500°C for one to twenty hours.

**Patentansprüche**

1. Copräzipitat, umfassend einen schichtförmigen Kristallit mit der Struktur

$$\begin{array}{c} M^{II} \quad {}^{c}_{d}Y^{d}_{c} \\ \hline M^{I} \quad {}^{a}_{b}X^{b}_{a} \\ \hline M^{II} \quad {}^{c}_{d}Y^{d}_{c} \\ \hline \end{array}$$

worin $M^I$ ein oder mehrere Metallkationen mit der Valenz a darstellt, $M^{II}$ ein oder mehrere Metallkationen darstellt, von denen mindestens eins verschieden von $M^I$ ist mit Valenzen c, die verschieden sind von a, wobei $M^I$ und $M^{II}$ ausgewählt sind aus der Gruppe, bestehend aus Li, Mg, Zn, Al, Cr und Mischungen davon;

X und Y jeweils ein oder mehrere Anionen mit Valenzen b und d darstellen, die sich im Ladungsausgleich mit a bzw. c befinden und ausgewählt sind aus der Gruppe, bestehend aus $OH^-$, $F^-$, $Cl^-$, $SO_4^=$, $OCOCH_3^-$, $CO_3^=$, $HCO_3^-$ und Mischungen davon;

wobei das molekulare Verhaltnis von $M^IX$ zu $M^{II}Y$ $(1^+z)M^IX \cdot 2M^{II}Y$ ist, worin $z \geq 0$ aber kleiner als 3 ist und genügend getrennt Phasen der Formel $M^{II} \cdot O \cdot Y$ und /oder $M^{II}Y$, um eine Gesamtstöchiometrie von etwa $M^IX \cdot 2M^{II}Y$ zu schaffen.

2. Copräzipitat nach Anspruch 1 mit der Struktur

$$\begin{array}{c} Al(OH)_3 \\ \hline (1+z)Mg(OH)_2 \\ \hline Al(OH)_3 \end{array}$$

und mindestens einer getrennten Phase der Formel $AlO(OH)$ und/oder $Al(OH)_3$, worin die Gesamtstöchiometrie des Präzipitats etwa $MgAl_2(OH)_8$ ist.

3. Copräzipitat nach Anspruch 2, worin z etwa 1 ist und genügend $AlO(OH)/Al(OH)_3$ vorhanden ist so, daß das Al/Mg-Verhältnis im Gesamtcopräzipitat etwa 2:1 ist.

4. Copräzipitat nach einem der vorhergehenden Ansprüche, worin im wesentlichen alle X und Y in OH's umgewandelt wurden durch basische Behandlung.

5. Copräzipitat nach Anspruch 1, worin $M^I$ Mg ist, $M^{II}$ eine Mischung der Metallkationen $Cr^{+++}$ und Al in einem Verhältnis von 1:9 bis 9:1 ist, X und Y OH sind und das Mg zu Al-Cr-Verhältnis etwa 1:2 ist.

6. Copräzipitat nach einem der Ansprüche 1 bis 5, hergestellt durch Copräzipitieren einer Lösung des gelösten $M^IX$ und $M^{II}Y$ beim niedrigsten pH, bei dem die Präzipitation auftritt für die gewünschten Komponenten, wobei $M^{II}Y$ und $M^IX$ in einem Verhältnis von 1,8:1 bis 2,2:1 vorhanden sind bei einer Temperatur von 20 bis 100°C.

7. Verfahren zur Herstellung eines Spinells durch Calcinieren eines Copräzipitats nach einem der vorhergehenden Ansprüche bei einer Temperatur von 400 bis 1400°C und gegebenenfalls Sintern dieses calcinierten Spinells bei einer Temperatur oberhalb 1500°C.

8. Verfahren nach Anspruch 7, worin vor dem Erhitzen das Präzipitat mit Wasser oder einer alkalischen Lösung gewaschen wird, das Präzipitat wiedergewonnen wird und getrocknet wird und das getrocknete Copräzipitat auf eine Temperatur von 1000 bis 1200°C erhitzt wird.

9. Verfahren nach Anspruch 7 oder 8, worin ein Spinell mit einer Dichte, die gleich ist oder größer als 50% der theoretischen Dichte des Spinells gebildet wird durch Sintern bei einer Temperatur von mehr als 1500°C.

10. Verfahren nach Anspruch 9, worin das Spinell verdichtet wird zu einer Dichte, die gleich ist oder größer als 90% der theoretischen Dichte des Spinells.

11. Verfahren nach Anspruch 7, worin das Copräzipitat, as calciniert werden soll, hergestellt wird durch Mischen von $M^IX$ und $M^{II}Y$ als wäßrige Aufschlämmung, die bei einem pH von 8 bis 10 gehalten wird, Waschen der Mutterlauge und Präzipitieren mit Wasser oder einer alkalischen Lösung, Abtrennen der Feststoffe von der Mutterlauge-Waschlauge, Waschen der Feststoffe mit Wasser und Trocknen.

12. Verfahren zur Herstellung eines Copräzipitats nach Anspruch 1, umfassend die Schritte, daß man

aus einer Lösung das aufgelöste $M^IX$ und $M^{II}Y$ beim niedrigsten pH der Lösung, bei der eine Ausfällung auftritt für alle Komponenten, copräzipitiert, wobei die Copräzipitation ausgeführt wird in einem Durchflußreaktor, wodurch das Präzipitat kontinuierlich entfernt wird, daß man ein Verhältnis von $M^{II}Y$ zu $M^IX$ von 1,8:1 bis 2,2:1 bei einer Temperatur von 20 bis 100°C aufrechterhält, die Mutterlauge und das Präzipitat mit Wasser oder einer alkalischen Lösung wäscht, das Präzipitat von der Mutterlauge abtrennt, das so behandelt Präzipitattwäscht und trocknet.

13. Verfahren zur Herstellung eines Spinellpulvers, das unter Hitze durch Calcinieren des gemäß dem Verfahren von Anspruch 12 erhaltenen Produktes bei einer Temperatur von 400 bis 1400°C verdichtet werden kann, wodurch ein Spinell der Struktur $M^IM_2^{II}O_4$ mit einer Dichte, die geringer ist als die theoretische Dichte, hergestellt wird.

14. Verfahren zur Herstellung eines dichten Spinells durch Sintern des gemäß dem Verfahren von Anspruch 13 erhaltenen Produkts bei einer Temperatur von mehr als 1500°C, mit oder ohne vorheriges Pressen.

15. Verfahren nach Anspruch 13, umfassend die Schritte des Zusammenpressen des Spinellpulvers bei einem Druck von 35 bis 350 MPa Gauge in die gewünschte Form und Sintern des so geformten Gegenstands bei einer Temperatur oberhalb 1500°C für einen Zeitraum von 5 Minuten bis 100 Stunden.

16. Verfahren nach Anspruch 13, einschließend den Schritt des Formes des Spinellpulvers mit oder ohne die Verwendung von Bindemitteln, die ätzbar, brennbar, schmelzbar oder verdampfbar sind, wobei das Formen unter Druck erfolgt, Sintern des geformten Gegenstandes bei einer Temperatur oberhalb von 1500°C und Waschen, Ätzen und/oder Verdampfen verbleibender Additive, um einen porösen geformten Gegenstand herzustellen, in dem die Teilchen hochverdichtet und miteinander verbunden sind.

17. Verfahren zur Herstellung einer Gießzusammensetzung, umfassend die Schritte, daß ein Spinellpulver durch Calcinieren eines Copräzipitats nach einem der Ansprüche 1 bis 6 bei einer Temperatur von 400 bis 1400°C hergestellt wird und daß dieser calcinierte Spinell mit Wasser und einem Entflockungsmittel gemischt wird, um eine im wesentlichen stabile Dispersion des Spinellpulvers zu bilden, die 10 bis 75 Gew.-% des Spinells enthält.

18. Verfahren nach Anspruch 17, worin

1. mindestens 10% des verwendeten Spinellpulvers ein Copräzipitat-Precursor ist, der bei einer Temperatur von mehr als 900°C und bis zu 1400°C calciniert wurde;
2. bis zu 90% ein präcalcinierter Copräzipitatprecursor ist, der bei einer Temperatur oberhalb von 1500°C gesintert wurde; und
3. der Ausgleich, falls erforderlich, einen Copräzipitat-Precursor, der bei einer Temperatur von 400 bis 900°C calciniert wurde, ist.

19. Verfahren nach Anspruch 17, worin

1. 0 bis 25 Gew.-% eines bei einer Temperatur von über 1500°C gesinterten Spinellpulvers;
2. 10 bis 50 Gew.-% eines bei einer Temperatur von mehr als 900°C und bis zu 1400°C calcinierten Spinellpulvers;
3. 25 bis 90 Gew.-% Wasser;
4. 0,2 bis 4 Gew.-% eines Formhilfsmittels; und
5. 0,1 bis 4 Ges.-% eines Entflockungsmittels verwendet werden.

20. Verfahren nach Anspruch 19, worin das Formhilfsmittel ein Alginat und das Entflockungsmittel ein Polyelektrolyt ist.

21. Verfahren nach Anspruch 17, worin mindestens 10 Gew.-% des verwendeten Spinellpulvers ein Copräzipitat-Precursor ist, der bei einer Temperatur von 900 bis 1400°C calciniert wurde; bis zu 90 Gew.-% des präcalcinierten Copräzipitat-Precursors bei einer Temperatur oberhalb 1500°C gesintert wurde und er Ausgleich, falls erforderlich, ein Magnesium-Aluminium-Copräzipitat ist, umfassend einen schichtförmigen Kristallit mit der Struktur

$$\frac{Al(OH)_3}{\dfrac{(1+z)Mg(OH)_2}{Al(OH)_3}}$$

und mindestens eine getrennte Phase der Formel AlO(OH) und/oder $Al(OH)_3$, worin die Gesamtstöchiometrie des Präzipitates etwa $MgAl_2(OH)_8$ ist.

22. Verfahren nach Anspruch 17, worin das Mg/Al-Copräzipitat weniger als 15 Gew.-% der Zusammensetzung ausmacht.

23. Verfahren nach Anspruch 17, wobei man eine Aufschlämmung mit niedriger Viskosität einer Mischung eines bei einer Temperatur von 400 bis 1400°C calcinierten Spinellprecursors und desselben oder eines verschiedenen Spinells oder eines Ansatzes eines Precursors, der bei einer Temperatur

oberhalb von 1500°C calciniert und dann gesintert wurde, herstellt, wobei der calcinierte Spinell in einer wäßrigen Aufschlämmung in einer Menge von 10 bis 100 Gew.-% vorhanden ist, von denen bis zu 33 Gew.-% der Gesamtzusammensetzung den Precursor bilden können und 0 bis 67 Gew.-% den gesinterten Spinell bilden können, wobei die Spinelle in der Aufschlämmung vorhanden sind, um 50 bis 75 Gew.-% Feststoffgehalt zu liefern, wobei der Ausgleich Wasser ist und 0,1 bis 5% eines Antiflockungsmittels.

24. Verfahren nach Anspruch 23, worin der Spinell $MgAl_2O_4$ ist.

25. Verfahren nach Anspruch 23, worin der Spinell $MgAl_2O_4$ ist und die Zusammensetzung jeweils etwa 33 Gew.-% von dem Precursor, einem Spinell, der bei einer Temperatur von oberhalb 900°C calciniert wurde und einem gesinterten Spinell umfaßt.

26. Verfahren nach Anspruch 23, worin der Spinell $MgAl_2O_4$ ist und die Zusammensetzung etwa 63,8 Gew.-% eines gesinterten Spinells, 24 Gew.-% eines bei einer Temperatur oberhalb von 900°C gesinterten Spinells und 12,1 Gew.-% eines bei einer Temperatur von 500 bis 900°C calcinierten Spinells umfaßt.

27. Gegenstand, hergestellt durch Gießen der durch ein Verfahren nach einem der Ansprüche 17 bis 26 erhaltenen Zusammensetzung und Sintern der so gegossenen Form bei einer Temperatur oberhalb von 1500°C für eine bis 20 Stunden.

**Revendications**

1. Coprécipite constitué d'un cristallite à couches ayant pour structure

$$\frac{M^{II} \quad {}^{c}_{d}Y^{d}_{c}}{M^{I} \quad {}^{a}_{b}X^{b}_{a}}$$

$$\underline{M^{II} \quad {}^{c}_{d}Y^{d}_{c}}$$

dans laquelle $M^I$ représente un ou plusieurs cations métalliques ayant pour valence(s) a, $M^{II}$ représente un ou plusieurs cations métalliques, dont l'un au moins diffère de $M^I$, de valence(s) c différant de a, $M^I$ et $M^{II}$ étant choisis dans le groupe constitué par Li, Mg, Zn, Al, Cr et leurs mélanges;

X et Y représentent chacun un ou plusieurs anions ayant pour valences b et d, en équilibre de charge avec a et c, respectivement, et choisis dans le groupe constitué par $OH^-$, $F^-$, $Cl^-$, $SO_4^{--}$, $OCOCH_3^-$, $CO_3^{--}$, $HCO_3^-$, et leurs mélanges, le rapport molaire de $M^IX$ à $M^{II}Y$ étant $(1+z)M^IX$, $2M^{II}Y$, avec $z \geq 0$ mais inférieur à 3; et de phases séparées de formule $M^{II}OY$ et/ou $M^{II}Y$ suffisant pour fournir une stoechiométrie globale d'environ $M^IX$, $2M^{II}Y$.

2. Coprécipité selon la revendication 1 ayant pour structure

$$\frac{Al(OH)_3}{(1+z)Mg(OH)_2}$$

$$\overline{Al(OH)_3}$$

et au moins une phase séparée de formule $AlO(OH)$ et/ou $Al(OH)_3$, dans lequel la stoechiométrie globale du précipité est environ $MgAl_2(OH)_8$.

3. Coprécipité selon la revendication 2, dans lequel z est d'environ 1 et une quantité suffisante de $AlO(OH)/Al(OH)_3$ est présente pour que le rapport Al/Mg dans l'ensemble du coprécipité soit d'environ 2:1.

4. Coprécipité selon l'une quelconque des revendications précédentes, dans lequel sensiblement tous les X et Y ont été transformés en OH par traitement par une base.

5. Coprécipité selon la revendication 1, dans lequel $M^I$ est Mg, $M^{II}$ est un mélange des cations métalliques $Cr^{+++}$ et Al, dans un rapport compris entre 1:9 et 9:1, respectivement, X et Y sont OH et le rapport Mg:Al-Cr est d'environ 1:2.

6. Coprécipité selon l'une quelconque des revendications 1 à 5, préparé par coprécipitation en solution de $M^IX$ et $M^{II}Y$ dissous, au pH le plus faible auquel a lieu la précipitation des constituants recherchés, $M^{II}Y$ et $M^IX$ étant présents selon un rapport de 1,8:1 à 2,2:1, respectivement, à une température de 20°C à 100°C.

7. Procédé de préparation d'une spinelle par calcination d'un coprécipité selon l'une quelconque des revendications précédentes, à une température de 400—1400°C et, éventuellement, frittage de ladite spinelle calcinée à une température supérieure à 1500°C.

8. Procédé selon la revendication 7, dans lequel, avant le chauffage, le précipité est lavé avec de l'eau ou une solution alcaline, le précipité est recouvert et séché, et le coprécipité séché est chauffé à une température de 1000 à 1200°C.

9. Procédé selon la revendication 7 ou 8, dans lequel on forme une spinelle ayant une densité égale ou supérieure à 50% de la densité théorique de la spinelle, par frittage à une température supérieure à 1500°C.

10. Procédé selon la revendication 9, dans lequel la spinelle est densifiée jusqu'à une densité égale ou supérieure à 90% de la densité théorique de la spinelle.

11. Procédé selon la revendication 7, dans lequel on prépare le coprécipité destiné à être soumis à une

calcination en mélangeant $M^{I}X$ et $M^{II}Y$, sous forme d'une suspension aqueuse maintenue à un pH de 8 à 10, en lavant la liqueur-mère et le précipité avec de l'eau ou une solution alcaline, en séparant les solides du mélange liqueur-mère/liqueur de lavage, en lavant les solides avec de l'eau, et en séchant.

12. Procédé de préparation d'un coprécipité selon la revendication 1, comprenant les étapes qui consistent à coprécipiter en solution $M^{I}X$ et $M^{II}Y$ dissous, au pH le plus faible de la solution auquel tous les constituants précipitent, la coprécipitation étant réalisée dans un réacteur à écoulement continu hors duquel le précipité est retiré en continu, à maintenir $M^{II}Y$ et $M^{I}X$ dans le rapport de 1,8:1 à 2,2:1, respectivement, à une température de 20°C à 100°C, à laver la liqueur-mère et le précipité avec de l'eau ou une solution alcaline, à séparer le précipité de sa liqueur-mère, à laver le précipité ainsi traité et à sécher le précipité.

13. Procédé de préparation d'une poudre de spinelle capable de densification sous l'action de la chaleur, par calcination du produit obtenu par le procédé de la revendication 12 à une température de 400°C à 1400°C, de manière à produire une spinelle de structure $M^{I}M^{II}{}_2O_4$ ayant une densité inférieure à la densité théorique.

14. Procédé de préparation d'une spinelle dense par frittage du produit obtenu par le procédé de la revendication 13 à une température supérieure à 1500°C, avec ou sans compression préalable de celui-là.

15. Procédé selon la revendication 13, qui comprend l'étape de compression de la poudre de spinelle sous une pression manométrique de 35 à 350 MPa, pour lui donner la forme désirée, et de frittage de l'article ainsi mis en forme à une température supérieure à 1500°C pendant une durée de 5 minutes à 100 heures.

16. Procédé selon la revendication 13, qui comprend l'étape de mise en forme de la poudre de spinelle, avec ou sans l'utilisation de liants qui peuvent être attaqués chimiquement, brûlés, fondus ou vaporisés, ladite mise en forme étant faite sous pression, de frittage dudit article mis en forme à une température supérieure à 1500°C, et de lavage, d'attaque chimique et/ou vaporisation de tout additif restant pour produire un article poreux mis en forme dans lequel les particules sont hautement densifiées et liées les unes aux autres.

17. Procédé de préparation d'une composition à mouler, comprenant les étapes qui consistent à préparer une poudre de spinelle par calcination d'un coprécipité selon l'une quelconque des revendications 1 à 6, à une température de 400—1400°C, et à combiner ladite spinelle calcinée avec de l'eau et un agent défloculant pour former une dispersion pratiquement stable de la poudre de spinelle qui comprend de 10 à 75% en poids de la spinelle.

18. Procédé selon la revendication 17, dans lequel

1) au moins 10% de la poudre de spinelle utilisée est un précurseur de coprécipité calciné à une température supérieure à 900°C et allant jusqu'à 1400°C;
2) jusqu'à 90% est un précurseur de coprécipité précalciné fritté à une température supérieure à 1500°C;
3) le reste éventuel est un précurseur de coprécipité calciné à une température de 400°C à 900°C.

19. Procédé selon la revendication 17, dans lequel on utilise:

1) de 0 à 25% en poids d'une poudre de spinelle frittée à une température d'environ 1500°C;
2) de 10 à 50% en poids d'une poudre de spinelle calcinée à une température supérieure à 900°C et allant jusqu'à 1400°C;
3) de 25 à 90% en poids d'eau;
4) de 0,2 à 4% en poids d'une auxiliaire de moulage; et
5) de 0,1 à 4% en poids d'un agent défloculant.

20. Procédé selon la revendication 19, dans lequel ledit auxiliaire de moulage est un alginate et ladite défloculant est un polyélectrolyte.

21. Procédé selon la revendication 17, dans lequel au moins 10% de la poudre de spinelle utilisée est un précurseur de coprécipité calciné à une température de 900° à 1400°C; jusqu'à 90% en poids du précurseur de coprécipité précalciné est fritté à une température supérieure à 1500°C; et le reste éventuel est un coprécipité magnésium-aluminium constitué d'un cristallite à couches ayant pour structure

$$\frac{Al(OH)_3}{\dfrac{(1+z)Mg(OH)_2}{Al(OH)_3}}$$

et au moins une phase séparée de formule AlO(OH) et/ou $Al(OH)_3$, la stoechiométrie globale du précipité étant d'environ $MgAl_2(OH)_8$.

22. Procédé selon la revendication 17, dans lequel ledit coprécipité Mg/Al constitue moins de 15% en poids de la composition.

23. Procédé selon la revendication 17, comprenant l'étape qui consiste à préparer une suspension de

faible viscosité d'un mélange de précurseur de spinelle calciné à une température de 400° à 1400°C et la même spinelle, ou une spinelle différente, ou un lot de precurseur différent, calciné puis fritté à une température supérieure à 1500°C, la spinelle calcinée étant présente dans une suspension aqueuse, à raison de 10 à 100% en poids, dont jusqu'à 33% en poids de la composition totale peut représenter le précurseur et de 0% à 67% en poids peut représenter la spinelle frittée, lesdites spinelles étant présentes dans ladite suspension pour fournir une teneur en solides de 50 à 75% en poids, le reste étant de l'eau, et de 0,1 à 5% d'un agent anti-floculant.

24. Procédé selon la revendication 23, dans lequel ladite spinelle est $MgAl_2O_4$.

25. Procédé selon la revendication 23, dans lequel ladite spinelle est $MgAl_2O_4$ et la composition comprend environ 33% en poids chacun dudit précurseur, spinelle calcinée à une température supérieure à 900°C et d'une spinelle frittée.

26. Procédé selon la revendication 23, dans lequel ladite spinelle est $MgAl_2O_4$ et la composition comprend environ 63,8% en poids d'une spinelle frittée, 24% en poids d'une spinelle calcinée à une température supérieure à 900°C et 12,1% en poids d'une spinelle calcinée à une température de 500°C à 900°C.

27. Article préparé par moulage de la composition obtenue par le procédé selon l'une quelconque des revendications 17 à 26 et frittage de la forme ainsi moulée à une température supérieure à 1500°C pendant une à 20 heures.